# EUROPEAN PATENT APPLICATION

(11) **EP 4 252 729 A1**
(43) Date of publication of application: **04.10.2023**
(21) Application number: 23165940.0
(22) Date of filing: 31.03.2023
(51) Int. Cl.: A61G 1/013, A61G 1/02

(54) **SPACE EXPLORER RESCUE SYSTEM**

(30) Priority: 01.04.2022 US 202217711648
(71) Applicant: Hamilton Sundstrand Corporation, Charlotte, NC 28217-4578 (US)
(72) Inventor: STRICKLAND, Julie, Houston, TX (US); GREENBERG, Ian Scott, Bordentown, NJ (US); JACOB, Josia, Brandon, FL (US); CALVO, Daniella, Houston, TX (US)
(74) Representative: Dehns

(57) **Abstract**

A space explorer rescue system including: a stretcher (110) including: a first support pole (130a); a second support pole (130b), the first support pole and the second support pole each being configured to be extended from a retracted position to a deployed position; and a body support (120) extending between the first support pole and the second support pole; and at least one wheel (190) attached or removably attached to the stretcher.

## Description

### BACKGROUND

The embodiments herein generally relate to space exploration equipment and more specifically, to a space explorer rescue system.

Space explorers are tasked with exploring or visiting planets, moons, asteroids, or other celestial bodies. A space explorer may be an astronaut or any wearer of a space suit. A space explorer may experience an emergency during an extra vehicular activity on a celestial body that inhibits the ability of the space explorer to walk. The combined weight of a spacesuit in addition to the body weight of the space explorer may make it difficult for a fellow space explorer to carry the space explorer who cannot walk.

### BRIEF SUMMARY

According to one aspect, a space explorer rescue system is provided. The space explorer rescue system including: a stretcher including: a first support pole; a second support pole, the first support pole and the second support pole each being configured to be extended from a retracted position to a deployed position; and a body support extending between the first support pole and the second support pole; and at least one wheel attached or removably attached to the stretcher.

Embodiments may include a control arm configured to attach the at least one wheel to the stretcher.

Further embodiments may include a hinge configured to attach the control arm to the stretcher, the at least one wheel being configured to fold relative to the stretcher.

Further embodiments may include that the at least one wheel further includes: a first wheel attached to the first support pole; and a second wheel attached to the second support pole.

Further embodiments may include: a first control arm configured to attach the first wheel to the first support pole; and a second control arm configured to attach the second wheel to the second support pole.

Further embodiments may include: a first hinge configured to attach the first control arm to the first support pole, the first wheel being configured to fold relative to the stretcher; and a second hinge configured to attach the second control arm to the second support pole, the second wheel being configured to fold relative to the stretcher.

Further embodiments may include that the first support pole is configured to telescope out of itself from the retracted position to the deployed position. The second support pole is configured to telescope out of itself from the retracted position to the deployed position.

Further embodiments may include that the first support pole is configured to fold onto itself from the deployed position to the retracted position. The second support pole is configured to fold onto itself from the deployed position to the retracted position.

Further embodiments may include: a primary life support system. The first support pole is configured to telescope into the primary support system from the deployed position to the retracted position. The second support pole is configured to telescope into the primary support system from the deployed position to the retracted position.

Further embodiments may include: a primary life support system. The first support pole is configured to fold onto the primary support system from the deployed position to the retracted position. The second support pole is configured to fold onto the primary support system from the deployed position to the retracted position.

Further embodiments may include: a primary life support system including a structural framework. The first support pole is configured to attach to the structural framework. The second support pole is configured to attach to the structural framework.

Further embodiments may include: a primary life support system including a structural framework, the structural framework including a first external mounting point and a second external mounting point. The first support pole is configured to attach to the first external mounting point. The second support pole is configured to attach to the second external mounting point.

Further embodiments may include that the first support pole is configured to attach directly to the first external mounting point. The second support pole is configured to attach directly to the second external mounting point.

Further embodiments may include that the first support pole is configured to attach to the first external mounting point through a first extension pole. The second support pole is configured to attach to the second external mounting point through a second extension pole.

Further embodiments may include that the first support pole and the second support pole each include a handle.

Further embodiments may include that the first support pole is oriented parallel to the second support pole.

Further embodiments may include that the body support is removably attached to at least one of the first support pole and the second support pole using an attachment mechanism.

Further embodiments may include that the attachment mechanism is a snap or a strap.

Further embodiments may include a compressed gas tank configured to provide compressed gas to inflate the at least one wheel.

According to another aspect, a method of manufacturing a space explorer rescue system is provided. The method including assembling a stretcher including the steps: deploying or attaching a first support pole; deploying or attaching a second support pole, the first support pole and second support pole each being configured to be extended from a retracted position to a deployed position; and deploying or attaching a body support to at least one of the first support pole and the second support pole, the body support being configured to extend between the first support pole and the second support pole; and deploying or attaching at least one wheel to the stretcher.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is a schematic view of a space explorer rescue system in use, according to an embodiment of the present disclosure;
FIG. 2 is a top view of the space explorer rescue system, according to an embodiment of the present disclosure;
FIG. 3 is a top view of the space explorer rescue system in a retracted or non-deployed position, according to an embodiment of the present disclosure;
FIG. 4 is a side view of the space explorer rescue system in the retracted or non-deployed position, according to an embodiment of the present disclosure; and
FIG. 5 is a flow diagram illustrating a flow diagram of a method of manufacturing the space explorer rescue system, according to an embodiment of the present disclosure.

### DETAILED DESCRIPTION

A detailed description of one or more embodiments of the disclosed apparatus and method are presented herein by way of exemplification and not limitation with reference to the Figures.

The embodiments of the method and apparatus detailed herein relate to a space explorer rescue system. As aforementioned, space explorers are tasked with exploring planets, moons, asteroids, or other celestial bodies. A space explorer may be an astronaut or any wearer of a space suit. A space explorer may experience an emergency during an extra vehicular activity on a celestial body, that inhibits the ability of the space explorer to walk. The combined weight of the space suit and body weight may make it difficult for a fellow space explorer to carry the incapacitated space explorer. This problem is exacerbated if the incapacitated space explorer is much larger in size than the fellow space explorer, who must then move the incapacitated space explorer. Embodiments disclosed herein seek to provide a light weight and foldable stretcher with wheels which may be integrated into the spacesuit and can quickly unfold in the event of an emergency. Advantageously, by integrating a stretcher into the structure of the portable life support system (PLSS) or using available extension handles, this innovation provides a means for a space explorer to transport an injured companion to safety.

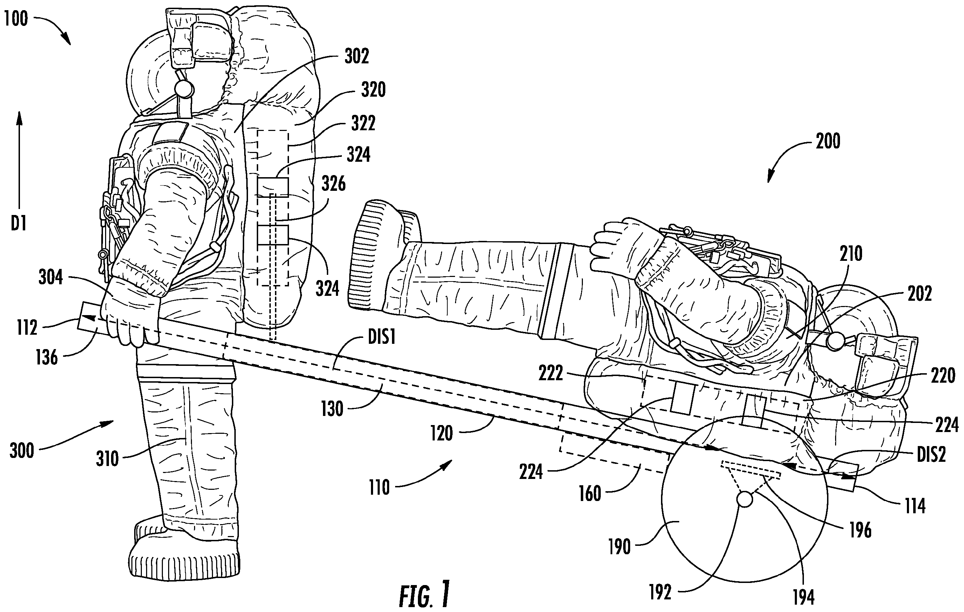

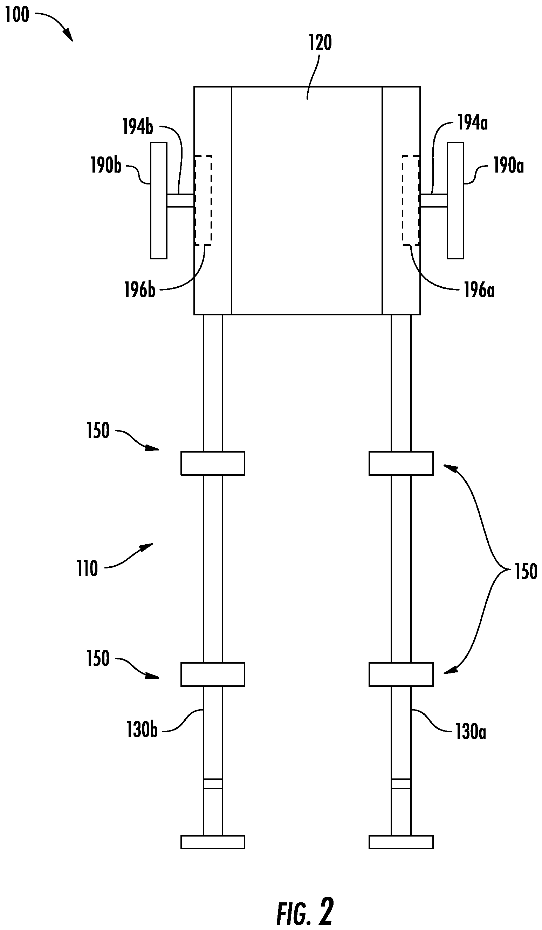

Referring to FIG. 1, an isometric view of a space explorer rescue system 100 is illustrated, in accordance with an embodiment of the present disclosure. The space explorer rescue system 100 includes a stretcher 110 with at least one wheel 190. There may be two wheels 190 including a first wheel 190a and a second wheel 190b (e.g., see FIG. 2). While the space explorer rescue system 100 is described and illustrated throughout with first wheel 190a and a second wheel 190b, the embodiments disclosed herein may also be applicable to space explorer rescue systems 100 having only one wheel 190 or multiple wheels.

The wheels 190 may be composed of rubber, a metal mesh or any other light weight material known to one of skill in the art. The wheels 190 may also be configured to inflate when deployment is required. Advantageously, storage and transportation of the wheels 190 in a deflated state would be easier as the wheels 190 would be lighter and take up less space. In one example, the wheels 190 may be inflated to be deployed using a compressed gas, such as, for example, carbon dioxide. For example, the space explorer rescue system 100 may further optionally include a compressed gas tank 160 configured to provide compressed gas to inflate the wheel 190 when the space explorer rescue system 100 is deployed. The wheel 190 may also be configured to fold relative to the stretcher 110. The wheel 190 may also be removable from the stretcher 110, which may aid in storage and/or transportation.

FIG. 1 illustrates a first space explorer 200 being carried on the space explorer rescue system 100 by a second space explorer 300. The first space explorer 200 may not be able to walk due to any type of incapacitation including but not limited to an illness, injury, or any other ailment. The second space explorer 300 may not be physically capable of carrying the first space explorer 200 due to the weight of the space suit 210 and the body weight of the first space explorer 200.

The stretcher 110 may include a forward end 112 and an aft end 114 located opposite the forward end 112. The stretcher 110 may include a body support 120 configured to allow the first space explorer 200 to be carried thereon. The body support 120 may be a separate component or part of an internal structure of the PLSS. The body support 120 may be located at or proximate the aft end 114 along with the one or more wheels 190. The body support 120 may be composed of a flexible material, such as, for example a fabric of the same type covering the spacesuit (e.g., Orthofabric, oxford leather, or any other fabric known to one of skill in the art). The stretcher 110 may include two support poles 130 that extend from the forward end 112 to the aft end 114. The support poles 130 may include a first support pole 130a and a second support pole 130b that extends parallel to the first support pole 130a (e.g., see FIG. 2). The first support pole 130a and second support pole 130b are each configured to be extended from a retracted position to a deployed position.

The support poles 130 are configured to provide structural rigidity to the stretcher 110. The support poles 130 may be composed of a strong light weight material, such as, for example, a metal, aluminum, a composite, carbon reinforced fiber, a plastic, Delrin, or any other strong light weight material known to one of skill in the art.

The support poles 130 may include handles 136 located at or proximate the forward end 112. The handles 136 may be configured to allow the second space explorer to grasp onto the support pole 130 and lift the forward end 112 of the stretcher 110 in an upward direction D1.

A control arm 194 connects the wheel 190 to the stretcher 110. The control arm 194 may specifically connects an axle 192 of the wheel 190 to the stretcher 110. The wheel 190 is configured to rotate around the axle 192. The control arm 194 may be connected to the stretcher 110 via a hinge 196. The hinge 196 is configured to fold the wheels 190 in for storage and out for use, as will be discussed further herein. Wheels may be detached and added as a separate action.

The axle 192 of the wheel 190 may operate as a fulcrum of the space explorer rescue system 100 and thus as the second space explorer 300 lifts the forward end 112 of the stretcher 110 in the upward direction D1, the stretcher 110 pivots at axle 192. The control arm 194 may be connected to the stretcher 110 at a first distance DIS1 away from the forward end 112 and a second distance DIS2 away from the aft end 114. The first distance DIS1 may be greater than the second distance DIS2 to give the second space explorer 300 more leverage to lift the forward end 112 of the stretcher 110 in the upward direction D1.

Advantageously, the space explorer rescue system 100 helps distributes the weight of the first space explorer 200 and the space suit 210 of the first space explorer 200 between the wheels 190 and the handles, thus reducing a total weight carried by the second space explorer 300. Advantageously, a center of gravity of the first space explorer 200 and the and the space suit 210 of the first space explorer 200 may or may not be placed over the wheels 190 for optimal performance.

A space suit 310 of the second space explorer 300 may include a primary life support system 320 to be worn on a back 302 of the second space explorer 300. The primary life support system 320 includes a structural framework 322 and external mounting points 324 that may be integrally connected to or be part of the structural framework 322. Extensions poles 326 may be configured to connect the support poles 130 to the external mounting points 324, which advantageously will relieve load from hands 304 of the second space explorer 300 and may allow the second space explorer 300 to not have to grip the support poles 130 with any hands 304. The external mounting points 324 may be extravehicular mobility unit (EMU) Don/Doff Assembly (EDDA) mounting points. There may be a first or multiple external mounting point(s) 324 on a first side of the primary life support system 320 and a second or multiple external mounting point(s) 324 on a second side of the primary life support system 320.

FIG. 6 A space suit 210 of the first space explorer 200 may include a primary life support system 220 to be worn on a back 202 of the second space explorer 200. The primary life support system 220 includes a structural framework 222 and external mounting points 224 that may be integrally connected to or be part of the structural framework 322 (one or more each side, near side and far side). Extensions poles 326 may be configured to connect the support poles 130 to the external mounting points 224, eliminating the need to have telescoping poles in the PLSS. The external mounting points 224 may be extravehicular mobility unit (EMU) Don/Doff Assembly (EDDA) mounting points, which are designed to hold the weight of the spacesuit and space explorer. There may be a first or multiple external mounting point(s) 224 on a first side of the primary life support system 220 and a second or multiple external mounting point(s) 224 on a second side of the primary life support system 220. Fabric would be folded down from the PLSS or a strap would be fastened over the poles to support the space explorer's boots.

A space suit 210 of the first space explorer 200 may include a primary life support system 220 to be worn on a back 202 of the first space explorer 200. The primary life support system 220 includes a structural framework 222 external mounting points 224 that may be integrally connected to or be part of the structural framework 222. The first space explorer 200 may be secured to the space explorer rescue system 100 via the external mounting points 224, which advantageously helps prevent the first space explorer from sliding off the body support 120. The first space explorer 200 may be secured to directly to the external mounting points 224. The external mounting points 224 may be EDDA mounting points. There may be a first external mounting point 224 on a first side of the primary life support system 220 and a second external mounting point 224 on a second side of the primary life support system 220.

Referring now to FIG. 2, with continued reference to FIG. 1, a top view of the space explorer rescue system 100 is illustrated in accordance with an embodiment of the present disclosure.

As aforementioned, the space explorer rescue system 100 includes the stretcher 110, a first wheel 190a, and a second wheel 192b. The first wheel 190a may be a left wheel and the second wheel 192b may be a right wheel. The stretcher 110 includes a first support pole 130a, a second support pole 130b that extends parallel to the first support pole 130a, and the body support 120 that extends between the first support pole 130a and the second support pole 130b. The first support pole 130a may be a left support and the second support pole 130b may be a right support pole.

A first control arm 194a is configured to attach the first wheel 190a to the first support pole 130a. A first hinge 196a is configured to attach the first control arm 194a to the first support pole 130a. The first hinge 196a may be configured to allow the first control arm 194a to rotate relative to the first support pole 130a.

A second control arm 194b is configured to attach the second wheel 190b to the second support pole 130b. A second hinge 196b is configured to attach the second control arm 194b to the second support pole 130b. The second hinge 196b may be configured to allow the second control arm 194b to rotate relative to the second support pole 130b.

The first support pole 130a and the second support pole 130b may be configured to fold out or telescope out from a retracted position to a deployed position, as will be discussed further herein. The first support pole 130a and the second support pole 130b are illustrated in FIGS. 1 and 2 in the deployed position.

Each support pole 130a, 130b may include one or more attachment mechanisms 150 configured to attach the body support 120 to the support poles 130a, 130b. The one or more attachment mechanisms 150 may be a strap, a snap, or any other similar attachment mechanism known to one of skill in the art. The body support 120 is removably attached to at least one of the first support pole 130a and the second support pole 130b using an attachment mechanism 150. Alternately, the body support 120 may be a fabric that may be folded up and/or can be pulled down to extend to all points 150. Another embodiment, the body support 120 may be small sections of fabric (e.g., strips), which may attach to the points 150.

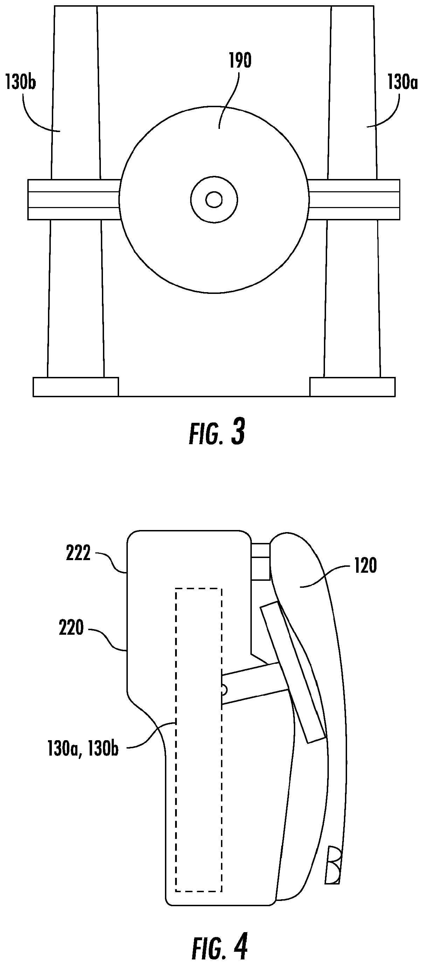

Referring now to FIGS. 3-4, with continued reference to FIGS. 1-2, a top view of the space explorer rescue system 100 in a retracted position is illustrated in FIG. 3 and a side view of the space explorer rescue system 100 in a retracted position is illustrated in FIG. 4, in accordance with an embodiment of the present disclosure.

The first support pole 130a is illustrated in FIGS. 3 and 4 in a retracted position. The first support pole 130a is retracted to the retracted position for ease of storage and transportation. The first support pole 130a may be configured to telescope into itself and/or into the structural framework 222 of the primary life support system 220 from a deployed position to a retracted position. The first support pole 130a may be configured to fold onto itself and/or onto the structural framework 222 of the primary life support system 220 from the deployed position to the retracted position. The first support pole is configured to telescope out of itself 130a and/or the primary life support system 220 from the retracted position to the deployed position.

The second support pole 130b is illustrated in FIGS. 3 and 4 in a retracted position. The second support pole 130b is retracted to the retracted position for ease of storage and transportation. The second support pole 130b may be configured to telescope into itself and/or into the structural framework 222 of the primary life support system 220 from the deployed position to the retracted position. The second support pole 130b may be configured to fold onto itself and/or onto the structural framework 222 of the primary life support system 220 from the deployed position to the retracted position. The second support pole 130b is configured to telescope out of itself and/or the primary life support system 220 from the retracted position to the deployed position.

The first support pole 130a and the second support pole 130b are in a retracted position, the wheels 190 may fold flat onto themselves about between the first support pole 130a and the second support pole 130b, as illustrated in FIG. 3. The body support 120 may fold over the first support pole 130a, the second support pole 130b, and the wheels 190 in the retracted position to enclose the first support pole 130a, the second support pole 130b, and the wheels 190 between the body support 120 and the primary life support system 220 for storage and transportation.

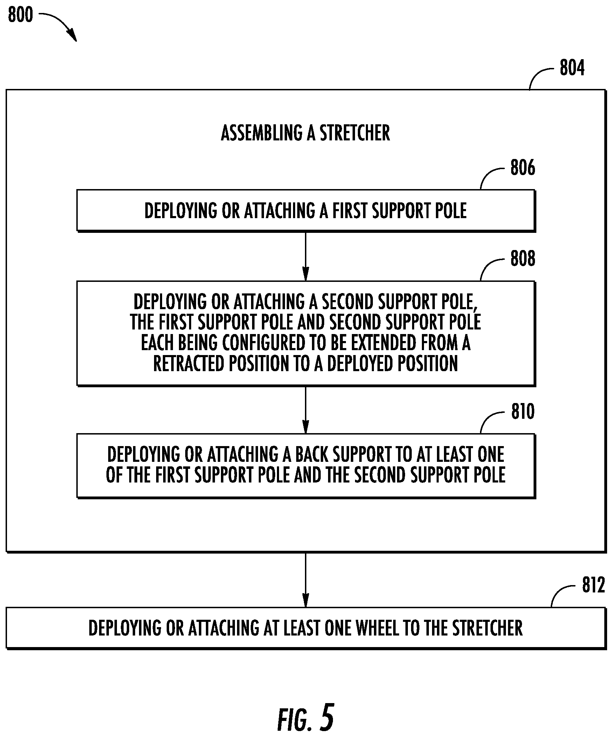

Referring now to FIG. 5, with continued reference to FIGS. 1-4, a flow diagram of a method 800 of manufacturing an space explorer rescue system 100 is illustrated in accordance with an embodiment of the present disclosure.

At block 804, a stretcher 110 is assembled comprising the steps of blocks 806, 808, 810. At block 806, a first support pole 130a is deployed or attached. At block 808, a second support pole 130b is deployed or attached. The first support pole 130a and second support pole 130b each being configured to be extended from a retracted position to a deployed position. At block 810, a body support 120 is deployed or attached to at least one of the first support pole 130a and the second support pole 130b. The bodysupport 130 is configured to extend between the first support pole 130a and the second support pole 130b.

At block 812, at least one wheel 190 is deployed or attached to the stretcher 110. The at least one wheel 190 may be configured to fold relative to the stretcher 110.

While the above description has described the flow process of FIG. 5 in a particular order, it should be appreciated that unless otherwise specifically required in the attached claims that the ordering of the steps may be varied.

Technical effects and benefits of the features described herein include a space explorer rescue system including a stretcher and one or more wheels configured to contract to a retracted position and extend to a deployed position.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A space explorer rescue system, comprising:
a stretcher (110) comprising:
a first support pole (130a);
a second support pole (130b), the first support pole and the second support pole each being configured to be extended from a retracted position to a deployed position; and
a body support (120) extending between the first support pole and the second support pole; and
at least one wheel (190) attached or removably attached to the stretcher.

2. The space explorer rescue system of claim 1, further comprising:
a control arm (194) configured to attach the at least one wheel to the stretcher.

3. The space explorer rescue system of claim 2, further comprising:
a hinge (196) configured to attach the control arm to the stretcher, the at least one wheel being configured to fold relative to the stretcher.

4. The space explorer rescue system of any preceding claim, wherein the at least one wheel further comprises:
a first wheel (190a) attached to the first support pole; and
a second wheel (190b) attached to the second support pole.

5. The space explorer rescue system of claim 4, further comprising:
a first control arm (194a) configured to attach the first wheel to the first support pole; and
a second control arm (194b) configured to attach the second wheel to the second support pole; and optionally further comprising:
a first hinge (196a) configured to attach the first control arm to the first support pole, the first wheel being configured to fold relative to the stretcher; and
a second hinge (196b) configured to attach the second control arm to the second support pole, the second wheel being configured to fold relative to the stretcher.

6. The space explorer rescue system of any preceding claim, wherein the first support pole is configured to telescope out of itself from the retracted position to the deployed position, and
wherein the second support pole is configured to telescope out of itself from the retracted position to the deployed position; or
wherein the first support pole is configured to fold onto itself from the deployed position to the retracted position, and
wherein the second support pole is configured to fold onto itself from the deployed position to the retracted position.

7. The space explorer rescue system of any preceding claim, further comprising:
a primary life support system (220),
wherein the first support pole is configured to telescope into the primary life support system from the deployed position to the retracted position, and
wherein the second support pole is configured to telescope into the primary life support system from the deployed position to the retracted position.; or
wherein the first support pole is configured to fold onto the primary life support system from the deployed position to the retracted position, and
wherein the second support pole is configured to fold onto the primary life support system from the deployed position to the retracted position.

8. The space explorer rescue system of any of claims 1 to 6, further comprising:
a primary life support system (220) comprising a structural framework,
wherein the first support pole is configured to attach to the structural framework, and
wherein the second support pole is configured to attach to the structural framework.

9. The space explorer rescue system of any of claims 1 to 6, further comprising:
a primary life support system comprising a structural framework, the structural framework comprising a first external mounting point and a second external mounting point,
wherein the first support pole is configured to attach to the first external mounting point, and
wherein the second support pole is configured to attach to the second external mounting point.

10. The space explorer rescue system of claim 9, wherein the first support pole is configured to attach directly to the first external mounting point, and
wherein the second support pole is configured to attach directly to the second external mounting point; or
wherein the first support pole is configured to attach to the first external mounting point through a first extension pole, and
wherein the second support pole is configured to attach to the second external mounting point through a second extension pole.

11. The space explorer rescue system of claim 8, wherein the first support pole and the second support pole each include a handle (136).

12. The space explorer rescue system of any preceding claim, wherein the first support pole is oriented parallel to the second support pole.

13. The space explorer rescue system of any preceding claim, wherein the body support is removably attached to at least one of the first support pole and the second support pole using an attachment mechanism (150), and optionally wherein the attachment mechanism is a snap or a strap.

14. The space explorer rescue system of any preceding claim, further comprising:
a compressed gas tank (160) configured to provide compressed gas to inflate the at least one wheel.

15. A method of manufacturing a space explorer rescue system, comprising:
assembling a stretcher (110) comprising the steps:
deploying or attaching a first support pole (130a);
deploying or attaching a second support pole (130b), the first support pole and second support pole each being configured to be extended from a retracted position to a deployed position; and
deploying or attaching a body support (120) to at least one of the first support pole and the second support pole, the body support being configured to extend between the first support pole and the second support pole; and
deploying or attaching at least one wheel (190) to the stretcher.
